# EUROPEAN PATENT APPLICATION

(11) **EP 4 052 586 A1**
(43) Date of publication of application: **07.09.2022**
(21) Application number: 20881402.0
(22) Date of filing: 28.10.2020
(51) Int. Cl.: A23J 1/12, A23G 1/34, A23G 1/44

(54) **COCOA SUBSTITUTE**

(30) Priority: 29.10.2019 JP 2019196543
(71) Applicant: Fuji Oil Holdings Inc., Izumisano-shi, Osaka 598-8540 (JP)
(72) Inventor: KATSURA, Atsuya, Izumisano-shi, Osaka 598-8540 (JP); WATANABE, Shu, Izumisano-shi, Osaka 598-8540 (JP)
(74) Representative: Becker, Eberhard
(86) International application number: PCT/JP2020/040491
(87) International publication number: WO 2021/085489

(57) **Abstract**

The purpose of the present invention is to provide a cocoa substitute in which is used a supplementary raw material produced in a step for manufacturing a food product. A cocoa substitute containing a protein composition derived from beer lees can be used as a raw material in a chocolate-like food product, etc.

## Description

### [Technical Field]

The present invention relates to a cocoa substitute.

### [Background Art]

Chocolate is composed of cacao mass, cocoa butter, sugar, and the like, the unique flavor and texture of chocolate are preferred, and chocolate is consumed all over the world. However, the areas where cacao can be harvested are limited, and chocolate manufactured from cacao as the general raw material is expensive. Among the components derived from cacao, with respect to cocoa butter, studies have been made to obtain a substitute material by separating palm oil and the like or by transesterification, and it has become possible to obtain a substitute material at a lower price than cacao butter.

On the other hand, regarding a cocoa substitute, in addition to the above-mentioned approach based on fats and oils, there are also technologies that utilize by-products generated in a step for manufacturing plant raw materials or general raw materials.

For example, there are a technology related to a method for providing a cocoa substitute based on a material selected from roasted wheat, roasted and/or malted barley (Patent Literature 1), a technology that uses dried shochu lees as a raw material for chocolate (Patent Literature 2), a technology related to a cocoa substitute containing soy protein extraction residue as a main component (Patent Literature 3), and the like.

### [Citation List]

### [Patent Literature]

[Patent Literature 1]
   Japanese Patent No. 6211056
[Patent Literature 2]
   Japanese Patent Laid-Open No. 2008-173057
[Patent Literature 3]
   Japanese Patent Laid-Open No. 2015-027280
[Patent Literature 4]
   Japanese Patent Laid-Open No. S51-114268
[Patent Literature 5]
   Japanese Patent Laid-Open No. S51-129776

### [Summary of Invention]

### [Technical Problem]

The cocoa substitutes of Patent Literature 1 to 3 still have room for improvement in quality, flavor, and the like. Further, particularly when studying a cocoa substitute material as in the technologies of Patent Literature 2 or 3, effectively utilizing by-products produced in the step for manufacturing food products such as shochu and soybean protein is a significant point.

The purpose of the present invention is to provide a cocoa substitute in which a supplementary raw material produced in a step for manufacturing a food product is used.

### [Solution to Problem]

The present inventors have made extensive studies on solving the above-described problems. With regard to this, beer lees, which are generated in large quantities annually, will be focused upon. Beer lees are by-produced in the saccharification process of malt, which is the general raw material for beer manufacturing, and other supplementary raw materials. Approximately one million tons of beer lees are produced annually in Japan alone, and it costs a lot to process the beer lees. The beer lees are mainly used as a raw material for livestock feed, and it cannot be said that the beer lees are effectively used. Further, although there is knowledge about the method for collecting protein from brewed grains such as beer lees (Patent Literature 4 and 5), no specific use has been disclosed.

Therefore, the present inventors first tried using draft beer lees dried as they are for chocolate, but the flavor was poor with a grain odor, and the texture was also powdery and poor. In addition, it was difficult to achieve a chocolate-like dark brown color. As a result of further study, it was found that, when the protein composition obtained by heating beer lees under alkaline conditions was used as a raw material for chocolate-like food products which is a cocoa substitute food product, a good flavor and texture could be obtained, and the present invention was completed.

In other words, the present invention provides
(1) a cocoa substitute containing a protein composition derived from beer lees,
(2) the cocoa substitute according to (1), in which a protein content in the protein composition derived from beer lees is 30% by weight or more in terms of solid content,
(3) the cocoa substitute according to (1), in which a protein content in the protein composition derived from beer lees is 40% by weight or more in terms of solid content,
(4) a chocolate-like food product containing the cocoa substitute according to (1),
(5) a chocolate-like food product containing the cocoa substitute according to (2),
(6) a chocolate-like food product containing the cocoa substitute according to (3),
(7) the chocolate-like food product according to (4), in which the chocolate-like food product contains 35% by weight or less of the cocoa substitute according to (1),
(8) the chocolate-like food product according to (5), in which the chocolate-like food product contains 35% by weight or less of the cocoa substitute according to (2),
(9) the chocolate-like food product according to (6), in which the chocolate-like food product contains 35% by weight or less of the cocoa substitute according to (3), and
(10) a method for manufacturing a cocoa substitute containing a protein composition derived from beer lees, the method including: adjusting beer lees to pH 8 to 12 and then heating to extract the protein composition.
   In other words, the present invention provides
   (11) a cocoa substitute containing a protein composition derived from beer lees,
   (12) the cocoa substitute according to (11), in which the protein content in the protein composition derived from beer lees is 30% by weight or more in terms of solid content,
   (13) a chocolate-like food product containing the cocoa substitute according to (11) or (12), and
   (14) the chocolate-like food product according to (13), in which the chocolate-like food product contains 35% by weight or less of the cocoa substitute according to (11) or (12).

### [Advantageous Effects of Invention]

The cocoa substitute of the present invention has a good flavor, and for example, when incorporated into a chocolate-like food product, a chocolate-like color tone can be obtained with no roughness, a good texture, and a good flavor.

### [Description of Embodiments]

### (Cocoa substitute)

The "cocoa substitute" of the present invention refers to a food composition that can be used as a raw material for various foods and drinks as a substitute for cocoa. The properties of the cocoa substitute are suitably powdery, similar to cocoa.

The cocoa substitute of the present invention has no grain odor, has a good flavor, has a brownish color tone in appearance, and is similar to cocoa powder. For example, when incorporated into a chocolate-like food product, the cocoa substitute has no grain odor, a good flavor, no roughness, a good texture, and a brownish color tone. In addition, since the protein content is also high, a chocolate-like food product having a high protein content can be obtained.

### (Protein composition derived from beer lees)

The cocoa substitute of the present invention contains a protein composition derived from beer lees. The cocoa substitute preferably contains 50% by weight or more of protein composition derived from beer lees in terms of solid content, more preferably 60% by weight or more, 70% by weight or more, 80% by weight or more, 90% by weight or more, 95% by weight or more, 97% by weight or more, 98% by weight or more, 99% by weight or more, 99.5% by weight or more, or 100% by weight.

The crude protein content of the protein composition derived from beer lees is preferably 30% by weight or more, more preferably 35% by weight or more, still more preferably 40% by weight or more, and still more preferably 45% by weight or more in terms of solid content. As the upper limit value of the crude protein content, for example, 95% by weight or less, 90% by weight or less, 85% by weight or less, 80% by weight or less, 75% by weight or less, 70% by weight or less, 65% by weight or less, or 60% by weight or less can be selected. The crude protein content is measured by the Kjeldahl method using a nitrogen coefficient of 6.25.

### (Beer lees)

Beer lees, which are raw materials for a protein composition derived from beer lees, are by-product produced when wort is obtained from malt in the step for manufacturing beer. For beer lees, for example, in the beer manufacturing process, malt sprouted with barley is crushed, rice, corn, starch, and the like are added as supplementary raw materials to the malt, and after the saccharification process, the wort is filtered in the filtration process and the beer lees are obtained as a residue. However, not being limited to these processes, the beer lees include the equivalents thereof. In the present invention, beer lees include those produced in the step for manufacturing beer, as well as those produced in the step for manufacturing beer-flavored beverages such as low-malt beer and non-alcoholic beer.

As the beer lees, draft beer lees, dehydrated beer lees obtained by dehydrating draft beer lees with a dehydrator such as a cylinder press or a filter press, and dried products can also be used. Therefore, beer lees containing any amount of water can be used. For example, in a case of draft beer lees, the water content is approximately 71 to 85% by weight, in a case of the dehydrated beer lees, the water content is approximately 60 to 70% by weight, and in a case of the dried beer lees, the water content is approximately 10% by weight or less. Protein is usually contained in the dry weight of beer lees in an amount of approximately 20 to 30% by weight. From the viewpoint of preserving properties, it is preferable to use dried beer lees.

### (Manufacturing of protein composition derived from beer lees)

The method for manufacturing a protein composition derived from beer lees contained in the cocoa substitute of the present invention is not particularly limited, and a known method can be used. Hereinafter, preferred manufacturing aspects of the present invention will be described.

By adding water to beer lees as needed, and using an alkaline agent such as sodium hydroxide or potassium hydroxide, the pH is adjusted preferably to alkaline conditions of 8 to 12, and heating is performed preferably at 50 to 105°C for 10 minutes to 5 hours. By extracting under such alkaline conditions, the protein composition can be efficiently extracted from the beer lees, and a cocoa-like color tone is easily exhibited.

The lower limit of pH can be more preferably selected from 8.2 or more, pH 8.3 or more, 8.5 or more, 8.8 or more, 9.0 or more, and 9.2 or more. Further, the upper limit of pH can be more preferably selected from 11.8 or less, 11.7 or less, 11.5 or less, 11.3 or less, 11.0 or less, and 10.8 or less.

Further, the lower limit of the heating temperature can be more preferably selected from 52°C or higher and 55°C or higher. Further, the upper limit of the heating temperature can be more preferably selected from 100°C or lower, 95°C or lower, 90°C or lower, 85°C or lower, or 80°C or lower.

Further, the lower limit of the heating time can be more preferably selected from 15 minutes or more, 20 minutes or more, 30 minutes or more, and 45 minutes or more. Further, the upper limit of the heating time can be more preferably selected from 4 hours or less, 3.5 hours or less, 3 hours or less, 2.5 hours or less, and 2 hours or less.

After the heat treatment, solid-liquid separation is performed by a centrifugal separator or the like, the insoluble residue is removed, and the supernatant containing the protein is collected. If necessary, an acid such as hydrochloric acid is added to the supernatant to adjust the pH to 3.5 to 5.5 to precipitate the protein. Then, solid-liquid separation is performed with a centrifugal separator or the like, and the precipitate containing the protein is collected. Next, water is added to the precipitate such that the solid content becomes preferably 5 to 15% by weight, and an alkaline agent such as sodium hydroxide or potassium hydroxide is added to adjust the pH of the solution to 6 to 8. A protein composition derived from beer lees can be obtained by sterilizing this solution as necessary and then drying the solution by spray drying, freeze drying or the like.

### (Supplementary raw material)

The cocoa substitute of the present invention may be a protein composition derived from beer lees as it is, but may also contain flavoring ingredients such as flavorings and supplementary raw materials such as sugars, dietary fiber, starch, and pigments. For example, a cocoa-flavored flavoring ingredient can be added to obtain a cocoa substitute having a cocoa-like flavor. When the protein composition derived from beer lees is in the form of powder, the supplementary raw material may be mixed in as a powder, or may be added as a liquid to the protein composition derived from beer lees, which is then dried.

### (Use of cocoa substitute for food products)

The cocoa substitute of the present invention can be used as a raw material for chocolate-like food products, beverages such as chocolate beverages, powdered beverages, confectionery, baked confectionery, and the like.

### (Chocolate-like food products)

The chocolate-like food product in the present invention corresponds to chocolates, for example. In addition, the chocolates mentioned here refer to not only chocolate, quasi chocolate, and chocolate-based food products which are specified by the National Chocolate Industry Fair Trade Association and the Fair Trade Commission for Foods Using Chocolate, but also those having fats and oils as essential components, if necessary, having supplementary raw materials such as sugars, milk powder, cacao raw materials (cacao mass, cocoa, cocoa butter), dietary fiber, fruit juice powder, fruit powder, taste-imparting substances, emulsifiers, flavorings, and coloring agents, which are incorporated thereinto in any proportion.

In addition to cacao butter, examples of the fats and oils that can be used include various animal and vegetable fats and oils (for example, soybean oil, cottonseed oil, corn oil, safflower oil, olive oil, palm oil, rapeseed oil, rice bran oil, sesame oil, kapok oil, coconut oil, palm kernel oil, and cocoa butter substitute fat, babassu oil, milk fat, lard, fish oil, and whale oil), hardened oils thereof, fractionated oils, ester-exchanged oil, and the like.

Among these, it is preferable to use the cocoa butter substitute fat, and the non-cacao chocolate-like food product can be manufactured by using the cocoa substitute and the cocoa butter substitute fat of the present invention.

In the chocolate-like food product, the content of the cocoa substitute according to the present invention in the chocolate-like food product is preferably 35% by weight or less, more preferably 1 to 35% by weight, still more preferably 3 to 35% by weight. By setting the content in this range, a chocolate-like food product having a good flavor and texture can be obtained.

In order to manufacture chocolate-like food products, the manufacturing may be carried out according to usual methods for manufacturing chocolate. For example, the manufacturing may be performed by rolling not only the cocoa substitute of the present invention, but also a raw material mixture, into which the supplementary raw materials such as the above-mentioned fats and oils, and if necessary, sugars, milk powder, and cacao raw materials (cacao mass, cocoa, cocoa butter), dietary fiber, fruit juice powder, fruit powder, taste-imparting substances, emulsifiers, flavorings, and coloring agents, are incorporated in any proportion, and by performing conching processing. However, the manufacturing is not limited to this method.

### (Chocolate beverage)

For manufacturing chocolate beverages, any of the usual preparation methods can be employed using chocolate components, sweeteners, and dairy products as general raw materials, in addition to the use of the cocoa substitute of the present invention. The chocolate beverages in the present invention also include those referred to as cocoa beverages.

As the chocolate component, one or more selected from cocoa powder, cacao mass, cocoa butter, and cocoa butter substitute fat can be used. The content of the cocoa substitute according to the present invention in the chocolate beverage is approximately 0.1 to 5% by weight in the chocolate beverage.

As the sweetener, any known sweetener can be used, but for example, one or more selected from saccharides (for example, sugar, glucose, fructose, high fructose corn syrup, refined sugar, trehalose, maltitol, and sorbitol), aspartame, stevia, glycyrrhizin, thaumatin and the like are suitable.

The dairy products may be any ordinary product, and specific examples thereof include milk, whole milk powder, skim milk powder, cream, butter, condensed milk, skim milk, and modified milk powder.

### Examples

The present invention will be described below with reference to Examples. Furthermore, % in the examples means a weight standard unless otherwise specified.

### (Example 1) Manufacturing of cocoa substitute

2500 g of water were added to 1000 g of draft beer lees (moisture: 73.4%), sodium hydroxide was added to adjust to pH 10, heat treatment was performed at 60 to 65°C for 1 hour to extract protein, and then by centrifugal separation (2000 xg, 20 minutes), separation was performed into insoluble residue and soluble fractions containing protein. Then, the soluble fraction was adjusted to pH 4.5 with hydrochloric acid and acid precipitation was performed. The precipitate was collected by centrifugal separation (2000 xg, 20 minutes), and the same volume of water was added to the precipitate to prepare a solution adjusted to pH 7 with sodium hydroxide. The solution was sterilized at 140°C for 7 seconds with a continuous direct heating sterilizer, and then spray-dried with a spray dryer to obtain a protein composition derived from beer lees of the present invention, which was used as a cocoa substitute.

The water content of the obtained cocoa substitute was 3%, the crude protein was 50% in terms of solid content, the crude ash content was 4% in terms of solid content, the lipid was 13% in terms of solid content, and the carbohydrate was 33% in terms of solid content.

The crude protein mass was measured as a percentage with respect to the sample by calculating the total nitrogen content in the sample by the Kjeldahl method and multiplying by a coefficient of 6.25, and expressed in terms of solid content. The crude ash amount was measured as a percentage with respect to the sample of the residue when the sample was completely incinerated at 600°C, and expressed in terms of solid content. Lipids were measured by Soxhlet extraction method. The amount obtained by subtracting the total amount of crude protein, crude ash, and lipid from 100% was the carbohydrate amount.

### (Examples 2 to 5, Comparative Example 1) Manufacturing of chocolate-like food product

4.0% cocoa substitute of Example 1, 36.0% lactose, 24.3% sugar, 35.3% cocoa butter substitute fat (Melano NEW SS7, manufactured by Fuji Oil Co., Ltd.), 0.4% lecithin, and 0.03% flavorings were incorporated to obtain a chocolate-like food product according to a conventional method (Example 2).

16.9% cocoa substitute of Example 1, 23.1% lactose, 24.3% sugar, 35.3% cocoa butter substitute fat (Melano NEW SS7, manufactured by Fuji Oil Co., Ltd.), 0.4% lecithin, and 0.03% flavorings were incorporated to obtain a chocolate-like food product according to a conventional method (Example 3).

33.7% cocoa substitute of Example 1, 6.3% lactose, 24.3% sugar, 35.3% cocoa butter substitute fat (Melano NEW SS7, manufactured by Fuji Oil Co., Ltd.), 0.4% lecithin, and 0.03% flavorings were incorporated to obtain a chocolate-like food product according to a conventional method (Example 4).

40.0% cocoa substitute of Example 1, 24.3% sugar, 35.3% cocoa butter substitute fat (Melano NEW SS7, manufactured by Fuji Oil Co., Ltd.), 0.4% lecithin, and 0.03% flavorings were incorporated to obtain a chocolate-like food product according to a conventional method (Example 5).

In addition, 16.9% dried beer lees crushed product, 23.1% lactose, 24.3% sugar, 35.3% cocoa butter substitute fat (Melano NEW SS7, manufactured by Fuji Oil Co., Ltd.), 0.4% lecithin, and 0.03% flavorings were incorporated to obtain a chocolate-like food product according to a conventional method (Comparative Example 1).

The formulations are shown in Table 1.

### (Evaluation of chocolate-like food product)

The evaluation of chocolate-like food products was performed by 5 skilled panels according to the sensory evaluation criteria shown below using a chocolate-like food product (Comparative Example 2) as a control, which is prepared by incorporating 16.9% cocoa powder, 23.1% lactose, 24.3% sugar, 35.3% cocoa butter substitute fat (Melano NEW SS7, manufactured by Fuji Oil Co., Ltd.), 0.4% lecithin, and 0.03% flavorings thereinto, and the evaluation score was determined by agreement. In the items of flavor, texture, and color, those with 3 points or more in all items were determined as pass in the comprehensive evaluation. The results are shown in Table 1.

**(Table 1) Formulation and evaluation results of chocolate-like food products**

| | Example 2 | Example 3 | Example 4 | Example 5 | Comparative Example 1 | Comparative Example 2 |
|---|---|---|---|---|---|---|
| Cocoa substitute of Example 1 | 4.0 | 16.9 | 33.7 | 40 | - | - |
| Beer lees crushed product | - | - | - | - | 16.9 | - |
| Cocoa powder | - | - | - | - | - | 16.9 |
| Lactose | 36.0 | 23.1 | 6.3 | - | 23.1 | 23.1 |
| Sugar | 24.3 | 24.3 | 24.3 | 24.3 | 24.3 | 24.3 |
| Cocoa butter substitute fat | 35.3 | 35.3 | 35.3 | 35.3 | 35.3 | 35.3 |
| Lecithin | 0.4 | 0.4 | 0.4 | 0.4 | 0.4 | 0.4 |
| Vanilla flavorings | 0.03 | 0.03 | 0.03 | 0.03 | 0.03 | 0.03 |
| Total | 100.0 | 100.0 | 100.0 | 100.0 | 100.0 | 100.0 |
| Sensory: flavor | 3 | 4 | 3 | 3 | 2 | 5 |
| Sensory: texture | 4 | 4 | 4 | 3 | 1 | 5 |
| Color tone: | 3 | 5 | 5 | 5 | 2 | 5 |
| Comprehensive evaluation: Pass when scores are 3 points or higher in all items | Pass | Pass | Pass | Pass | Fail | Pass |

### (Sensory evaluation criteria)

1. Flavor
5 points: Chocolate flavor is equivalent to that of Comparative Example 2.
4 points: Chocolate flavor is slightly inferior to that of Comparative Example 2.
3 points: Chocolate flavor is inferior to that of Comparative Example 2, but is within the acceptable range.
2 points: Chocolate flavor is unacceptably inferior to that of Comparative Example 2.
1 point: Chocolate flavor is significantly inferior to that of Comparative Example 2 and is completely unacceptable.
2. Texture
5 points: There is no roughness, and the melt-in-the-mouth feeling is equivalent to that of the chocolate-like food product of Comparative Example 2 and is very good.
4 points: There is no roughness, and the melt-in-the-mouth feeling is slightly inferior to that of the chocolate-like food product of Comparative Example 2, but is good.
3 points: There is no roughness, and the melt-in-the-mouth feeling is inferior to that of the chocolate-like food product of Comparative Example 2, but is within the allowable range and is slightly good.
2 points: There is some roughness, and the melt-in-the-mouth feeling is inferior to that of the chocolate-like food product of Comparative Example 2 and is slightly poor.
1 point: There is roughness, and the melt-in-the-mouth feeling is significantly inferior to that of the chocolate-like food product of Comparative Example 2 and is poor.
3. Color tone
5 points: Color tone is a chocolate-like brownish color tone equivalent to that of Comparative Example 2.
4 points: The brownish color tone is very slightly lighter than that of Comparative Example 2.
3 points: The brownish color tone is slightly lighter than that of Comparative Example 2, but is within the allowable range.
2 points: The brownish color tone is lighter than that of Comparative example 2 and is not allowable.
1 point: The brownish color tone is significantly lighter than that of Comparative example 2 and is completely unacceptable.

As shown in Table 1, the flavor, texture, and color tone of the chocolate-like food products of Examples 2 to 5 showed good results.

### (Example 6, Comparative Example 3) Manufacturing and evaluation of chocolate beverage

A chocolate beverage was prepared by incorporating 1.0% cocoa substitute of Example 1, 93.0% milk, and 6.0% sugar (Example 6). In addition, the same chocolate beverage was prepared except that the cocoa substitute was replaced with cocoa powder (Comparative Example 3). When evaluated by 5 skilled panels, the texture and color tone were the same as those of Comparative Example 3, and the flavor was inferior to that of Comparative Example 3, but was determined to be within the allowable range.

## Claims

1. A cocoa substitute containing a protein composition derived from beer lees.

2. The cocoa substitute according to claim 1, wherein
a protein content in the protein composition derived from beer lees is 30% by weight or more in terms of solid content.

3. The cocoa substitute according to claim 1, wherein
a protein content in the protein composition derived from beer lees is 40% by weight or more in terms of solid content.

4. A chocolate-like food product containing the cocoa substitute according to claim 1.

5. A chocolate-like food product containing the cocoa substitute according to claim 2.

6. A chocolate-like food product containing the cocoa substitute according to claim 3.

7. The chocolate-like food product according to claim 4, wherein
the chocolate-like food product contains 35% by weight or less of the cocoa substitute according to claim 1.

8. The chocolate-like food product according to claim 5, wherein
the chocolate-like food product contains 35% by weight or less of the cocoa substitute according to claim 2.

9. The chocolate-like food product according to claim 6, wherein
the chocolate-like food product contains 35% by weight or less of the cocoa substitute according to claim 3.

10. A method for manufacturing a cocoa substitute containing a protein composition derived from beer lees, the method comprising:
adjusting beer lees to pH 8 to 12 and then heating to extract the protein composition.
